# EUROPÄISCHE PATENTSCHRIFT

(11) **EP 3 841 312 B1**
(45) Veröffentlichungstag und Bekanntmachung des Hinweises auf die Patenterteilung: **23.10.2024**
(21) Anmeldenummer: 19737052.1
(22) Anmeldetag: 03.07.2019
(51) Int. Cl.: B62K 25/28, B62J 6/025, B62J 45/41, B62J 45/42, B62K 25/04

(54) **HÖHENSTANDERFASSUNGSSYSTEM EINES MOTORRADS**
HEIGHT DETECTION SYSTEM OF A MOTORCYCLE
SYSTÈME DE DÉTECTION D'ASSIETTE D'UNE MOTO

(30) Priorität: 21.08.2018 DE 102018214042
(43) Veröffentlichungstag der Anmeldung: 30.06.2021
(73) Patentinhaber: Bayerische Motoren Werke Aktiengesellschaft, 80809 München (DE)
(72) Erfinder: PAZULLA, Martin, 82515 Wolfratshausen (DE); KRYCH, Tim, 81825 München (DE)
(86) Internationale Anmeldenummer: PCT/EP2019/067830
(87) Internationale Veröffentlichungsnummer: WO 2020/038637

(56) Entgegenhaltungen:
- EP-A1- 2 202 140
- DE-A1- 102014 209 164
- DE-C1- 19 733 719
- DE-T5- 112008 002 238
- JP-A- 2010 155 479
- JP-A- 2013 136 330
- JP-A- 2017 105 271
- JP-A- H03 128 785
- JP-A- H05 246 372
- JP-A- S5 826 613
- JP-A- S57 155 107

## Beschreibung

Die vorliegende Erfindung betrifft ein Höhenstanderfassungssystem eines Motorrads zur Feststellung eines belastungsabhängigen Höhenstands eines Heckträgerteils gegenüber einer Hinterradschwinge des Motorrads.

Eine unterschiedliche Belastung durch eine oder zwei Personen mit oder ohne Gepäck hat bei einem Motorrad große Auswirkungen auf die Fahreigenschaften. Um modernen Motorradregelungssystemen für z.B. die Federung oder die Scheinwerferausrichtung Informationen über die aktuelle Belastung des Motorrads bereit zu stellen, verfügen Motorräder über ein Höhenstanderfassungssystem. Im Stand der Technik wird zur Erfassung des Höhenstands die Auslenkung des Heckträgerteils gegenüber der Hinterradschwinge gemessen. Dabei umfasst das Höhenstanderfassungssystem eine Stabstange, einen Umlenkhebel, ein Potentiometer und einen separaten Blechhalter für die Aufnahme der Höhenstanderkennung an dem Heckträgerteil.

Nachteilig an diesem Systemaufbau ist, dass für die Aufnahme des Höhenstanderfassungssystems zwei separate Bauteile für die Aufnahme an dem Heckträgerteil nötig sind, und so der Montageaufwand durch die Teilevielzahl sehr hoch ist. Ferner beeinflussen Mehrteile bei der Motorradmontage den Logistikaufwand und benötigen zusätzlichen Lagerplatz.

Druckschriftlicher Stand der Technik im vorliegenden technischen Gebiet, welcher den Oberbegriff des Anspruchs 1 widerspiegelt, ist in den Dokumenten JP S57 155 107 A, JP H05 246 372 A, EP 2 202 140 A1,

JP 2013 136 330 A, JP 2010 155 479 A und JP 2017 105 271 A offenbart.

JPS57155107A offenbart ein Höhenstanderfassungssystem eines Motorrads zur Feststellung eines belastungsabhängigen Höhenstands eines Heckträgerteils gegenüber einer Hinterradschwinge des Motorrads umfassend eine das Heckträgerteil und die Hinterradschwinge indirekt verbindende Messvorrichtung zur Messung des Abstands zwischen dem Heckträgerteil und der Hinterradschwinge.

Es ist daher Aufgabe der vorliegenden Erfindung vorbesagte Nachteile zu überwinden und ein Höhenstanderfassungssystem eines Motorrads zur Feststellung eines belastungsabhängigen Höhenstands eines Heckträgerteils gegenüber einer Hinterradschwinge des Motorrads bereit zu stellen, das den Montageaufwand reduziert und die Anzahl der Bauteile sowie die dafür benötigten Werkzeuge minimiert.

Diese Aufgaben werden mit einer Merkmalskombination gemäß Patentanspruch 1 gelöst.

Erfindungsgemäß wird ein Höhenstanderfassungssystem eines Motorrads zur Feststellung eines belastungsabhängigen Höhenstands eines Heckträgerteils gegenüber einer Hinterradschwinge des Motorrads vorgeschlagen, das eine das Heckträgerteil und die Hinterradschwinge verbindende Messvorrichtung zur Messung des Abstands zwischen dem Heckträgerteil und der Hinterradschwinge umfasst. Dabei ist einstückig ein Befestigungssteg an dem Heckträgerteil ausgebildet. Der Befestigungssteg erstreckt sich von dem Heckträgerteil hervorstehend in Richtung der Hinterradschwinge und bildet eine seitliche Anlagefläche für die Messvorrichtung aus. Dies hat zur Folge, dass die Messvorrichtung direkt an dem Befestigungssteg des Heckträgerteils angebracht werden kann. Folglich wird ein Befestigungsbauteil, z. B. ein separater Blechhalter zum Aufnehmen der Messvorrichtung an dem Heckträgerteil, überflüssig und kann eingespart werden. Ferner bietet die seitliche Anlagefläche einen vorteilhaften und auf die Messvorrichtung abgestimmten Befestigungspunkt. Aufgrund der hervorstehenden Erstreckung in Richtung der Hinterradschwinge wird der Montageaufwand optimiert und die Kalibrierung der Messvorrichtung vereinfacht.

In einer vorteilhaften Ausführungsvariante ist vorgesehen, dass die seitliche Anlagefläche des Befestigungsstegs parallel zu der Ebene aus Längserstreckung und Vertikalerstreckung des Heckträgerteils verläuft. Da das Motorrad in dieser Ebene vertikal federt und somit die Auslenkung der Messvorrichtung in dieser Ebene stattfindet, ist die dazu parallel verlaufende seitliche Anlagefläche optimal für die Anbringung der Messvorrichtung ausgerichtet. Somit vereinfachen sich die geometrische Auslegung der Messvorrichtung und die Kalibrierung des Höhenstanderfassungssystems. Ferner ist die Ausrichtung der Anlagefläche günstig, da sie so in der Ebene liegt, in der die Auslenkung und die Belastungen des Befestigungsstegs auftreten. Da die Steifigkeit des Befestigungsstegs in dieser Ebene optimal ist, begünstigt dies die Lebensdauer des Höhenstanderfassungssystems und verringert den Wartungsaufwand.

Vorzugsweise ist an dem Befestigungssteg eine Vielzahl von Versteifungsrippen ausgebildet, die sich von einem Bodenprofil des Heckträgerteils entlang der seitlichen Anlagefläche erstrecken. Als Bodenprofil ist ein Endbereich der Vertikalerstreckung des Heckträgerteils in Richtung der Hinterradschwinge definiert.

In einem Ausführungsbeispiel der Erfindung ist vorgesehen, dass eine erste Versteifungsrippe von dem Bodenprofil des Heckträgerteils in eine Außenkontur des Befestigungsstegs übergeht.

Durch die Versteifungsrippen wird die Steifigkeit des Befestigungsstegs in der Ebene seiner Auslenkung und Belastungen weiter erhöht. Außerdem optimiert es die Bauteilfestigkeit des Befestigungsstegs gegen Belastungen in einer Querrichtung, die orthogonal zu der Ebene der Auslenkung verläuft.

Ferner ist eine Ausführung günstig, bei der jede Versteifungsrippe eine unterschiedlich gewinkelte Ausrichtung gegenüber einer Senkrechten der Vertikalerstreckung des Heckträgerteils aufweist, wodurch die Steifigkeit des Befestigungsstegs verbessert wird.

In einer weiteren vorteilhaften Variante ist an dem Befestigungssteg im Bereich der seitlichen Anlagefläche wenigstens eine Stufe ausgebildet und die Profildicke von dem Bodenprofil des Heckträgerteils in Richtung Hinterradschwinge verjüngt. Dabei ist günstig, dass an der Stufe mit der niedrigsten Profildicke eine Befestigung für die Messvorrichtung ausgebildet ist. Durch die angrenzende Stufe entsteht eine weitere Anlagefläche für die Messvorrichtung, an der sie bei der Montage angesetzt werden. Ferner ist die Messvorrichtung an der angrenzenden Stufe so angeordnet, dass sie die Messvorrichtung an dem Befestigungspunkt in Fahrtrichtung bedeckt. Damit schützt die angrenzende Stufe den Befestigungspunkt der Messvorrichtung vor Verschmutzung und erhöht die Lebensdauer.

Weiter vorteilhaft ist es, wenn im Bereich des geringsten Querschnitts des Befestigungsstegs eine Stufe eine halbkreisförmige Bogenform aufweist. Vorteilhaft daran ist, dass die Bogenform genau an die Messvorrichtung angepasst ist. Dadurch bietet die Stufe einen optimalen Anlagepunkt für die Montage. Außerdem ist der Befestigungssteg dadurch an die Auslenkung und Belastungen der Messvorrichtung während der Fahrt angepasst.

In einer bevorzugten Ausführungsform der Erfindung ist der Befestigungssteg flach und finnenartig ausgebildet ist. Die flache, finnenartige Geometrie bietet einen an die Anforderungen und Belastungen des Befestigungsstegs bestmöglichen Mittelweg zwischen Steifigkeit, Material- und Platzaufwand.

In einer Weiterbildung des vorliegenden Höhenstanderfassungssystems ist ferner vorgesehen, dass die Messvorrichtung eine Stabstange, einen Umlenkhebel und ein Potentiometer umfasst, die so angeordnet sind, dass die Stabstange und der Umlenkhebel die Hinterradschwinge mit dem Befestigungssteg verbinden, dabei drehbar gelagert sind und das Potentiometer zur Messung der Auslenkung an dem Befestigungssteg und dem Umlenkhebel angeordnet ist. Die relative Bewegung des Heckträgerteils zu der Hinterradschwinge bewirkt, dass die Stabstange den Umlenkstab an dem Befestigungssteg rotiert und das Potentiometer die Rotation des Umlenkhebels misst. Die Erfassung des Höhenstands ist somit mit einer reduzierten Bauteilzahl gewährleistet, da Funktionen vernachlässigter Bauteile integriert werden. Der Montageaufwand wird erleichtert und gleichzeitig die Werkzeuganzahl, die zur Montage des Höhenstanderfassungssystems benötigt wird, reduziert.

Vorzugsweise ist das Höhenstanderfassungssystem so ausgebildet, dass die Messvorrichtung ein elektrisches Ausgangssignal ausgibt. Vorteilhaft ist, dass ein elektrisches Ausgangssignal an ein Steuergerät gesendet werden und auf diese Weise von einem Bordcomputer weiterverarbeitet werden kann.

In einer bevorzugten Ausführungsform der Erfindung sind das Heckträgerteil und der Befestigungssteg einstückig aus Kunststoff ausgebildet.

Ferner ist eine Ausführungsvariante günstig, bei der die Messvorrichtung des Höhenstanderfassungssystems an der Hinterradschwinge in der gleichen Ebene liegt, wie die seitliche Anlagefläche des Befestigungsstegs. Dadurch erfolgt die Auslenkung des Höhenstanderfassungssystems nur in der gleichen Ebene der Auslenkung zwischen Heckträgerteil und Hinterradschwinge. Dies ist günstig für die Ermittlung des Höhenstands, da nur Auslenkungen in dieser Ebene berücksichtigt werden müssen und so der Berechnungsaufwand vereinfacht wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Seitenansicht eines Höhenstanderfassungssystems eines Motorrads zur Feststellung eines belastungsabhängigen Höhenstands eines Heckträgerteils gegenüber einer Hinterradschwinge des Motorrads,
- Fig. 2: eine Rückansicht des Höhenstanderfassungssystems aus Figur 1.

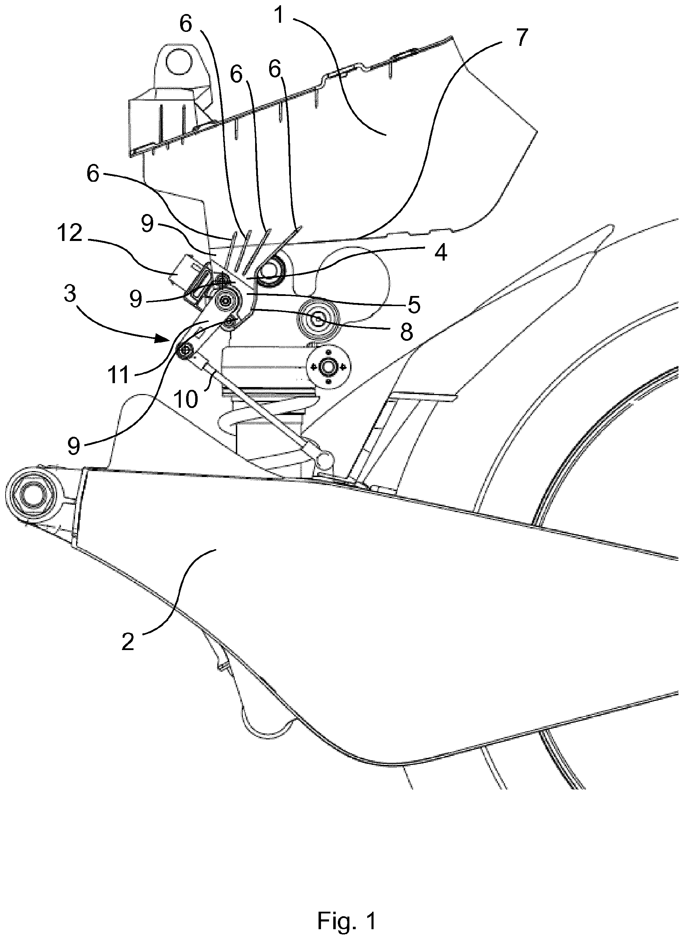

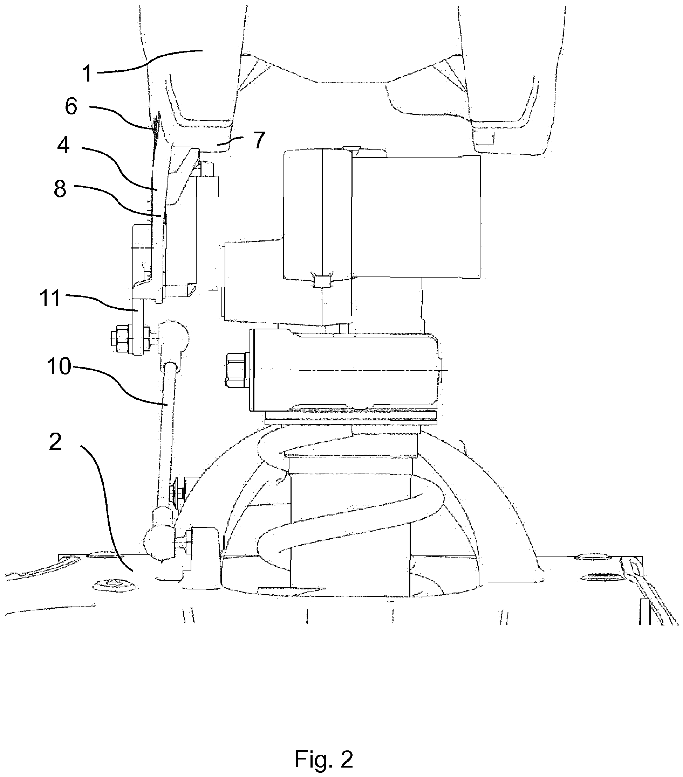

Die Erfindung wird im Folgenden mit Bezug auf die Figuren 1 und 2 anhand eines exemplarischen Ausführungsbeispiels beschrieben, wobei gleiche Bezugszeichen auf gleiche strukturelle und/oder funktionale Merkmale hinweisen.

In Figur 1 ist eine Seitenansicht eines Höhenstanderfassungssystems eines Motorrads zur Feststellung eines belastungsabhängigen Höhenstands eines Heckträgerteils 1 gegenüber einer Hinterradschwinge 2 des Motorrads dargestellt. Figur 1 zeigt eine Messvorrichtung 3, die das Heckträgerteil 1 und die Hinterradschwinge 2 verbindet. Ferner ist an dem Heckträgerteil 1 einstückig ein Befestigungssteg 4 ausgebildet. Der Befestigungssteg 4 erstreckt sich von dem Heckträgerteil 1 hervorstehend in Richtung der Hinterradschwinge 2 und ist flach und finnenartig ausgebildet. Dadurch wird eine seitliche Anlagefläche 5 für die Messvorrichtung 3 ausbildet. Die seitliche Anlagefläche 5 liegt in der Ebene aus Längserstreckung und Vertikalerstreckung des Heckträgerteils 1. Die Außenkontur des Befestigungsstegs 4 verlängert in dieser Ebene geradlinig eine vordere Außenkante des Bodenprofils 7 des Heckträgerteils 1. Ferner bildet der Befestigungssteg 4 in dieser Ebene ein abgerundetes Ende in Richtung Hinterradschwinge 2 aus und verläuft dann s-förmig zurück zu dem Bodenprofil 7 des Heckträgerteils 1. Von dem Bodenprofil 7 des Heckträgerteils 1 entlang der seitlichen Anlagefläche 5 erstrecken sich vier Versteifungsrippen 6. Eine erste Versteifungsrippe 6 geht von dem Bodenprofil 7 des Heckträgerteils 1 in die Außenkontur 8 des Befestigungsstegs 4 über und bildet in diesem Bereich eine verstärkte Außenkontur 8, die bis zu dem abgerundeten Ende in Richtung Hinterradschwinge 2 verläuft. Die weiteren erstrecken sich drei Versteifungsrippen 6 voneinander beabstandet über die seitliche Anlagefläche 5. Die Ausrichtung der Versteifungsrippen 6 gegenüber einer senkrechten der Vertikalerstreckung des Heckträgerteils 1 ist unterschiedlich gewinkelt. Dabei wird der Winkel zwischen Versteifungsrippe 6 und der senkrechten Vertikalerstreckung des Heckträgerteils 1 von der ersten Versteifungsrippe 6 zu den benachbarten Versteifungsrippen 6 spitzer. Im Bereich der seitlichen Anlagefläche 6 sind drei Stufen 9 ausgebildet und die Profildicke verjüngt sich von dem Bodenprofil 7 des Heckträgerteils 1 in Richtung Hinterradschwinge 2. Die Versteifungsrippen 6 erstrecken sich dabei nur über die Stufe 9 mit der höchsten Profildicke. Im Bereich der geringsten Profildicke weist die angrenzende Stufe 9 eine Bogenform auf, die an die Geometrie der Messvorrichtung 3 angepasst ist.

Die Messvorrichtung 3 in Figur 1 umfasst eine Stabstange 10, einen Umlenkhebel 11 und ein Potentiometer 12. Der Umlenkhebel 11 ist mittig an der Stufe 9 mit der geringsten Profildicke zwischen zwei Befestigungsbohrungen für das Potentiometer 12 angeordnet. Die bogenförmige Stufe 9 verläuft dabei angrenzend entlang des abgerundeten Umlenkhebels 11. Die Stabstange 10 und der Umlenkhebel 11 verbinden die Hinterradschwinge 2 mit dem Befestigungssteg 4. Das Potentiometer 12 ist zur Messung des Höhenstands so an dem Befestigungssteg 4 angeordnet, dass es die Auslenkung des Umlenkhebels 11 registriert.

Figur 2 zeigt eine Rückansicht des Höhenstanderfassungssystems aus Figur 1, das wie vorstehend beschrieben zueinander angeordnet und an dem Befestigungssteg 4 angebracht ist.

## Patentansprüche

1. Höhenstanderfassungssystem eines Motorrads zur Feststellung eines belastungsabhängigen Höhenstands eines Heckträgerteils (1) gegenüber einer Hinterradschwinge (2) des Motorrads umfassend eine das Heckträgerteil (1) und die Hinterradschwinge (2) verbindende Messvorrichtung (3) zur Messung des Abstands zwischen dem Heckträgerteil (1) und der Hinterradschwinge (2), **dadurch gekennzeichnet, dass**
an dem Heckträgerteil (1) einstückig ein Befestigungssteg (4) ausgebildet ist, der sich von dem Heckträgerteil (1) hervorstehend in Richtung der Hinterradschwinge (2) erstreckt und eine seitliche Anlagefläche (5) für die Messvorrichtung (3) bildet.

2. Höhenstanderfassungssystem gemäß Anspruch 1, **dadurch gekennzeichnet, dass** das Heckträgerteil (1) und der Befestigungssteg (4) einstückig aus Kunststoff gebildet sind.

3. Höhenstanderfassungssystem gemäß Anspruch 1 und 2, **dadurch gekennzeichnet, dass** die seitliche Anlagefläche (5) des Befestigungsstegs (4) parallel zu der Ebene aus Längserstreckung und Vertikalerstreckung des Heckträgerteils (1) verläuft.

4. Höhenstanderfassungssystem gemäß einem der vorherigen Ansprüche, **dadurch gekennzeichnet, dass** an dem Befestigungssteg (4) eine Vielzahl von Versteifungsrippen (6) ausgebildet ist, die sich von einem Bodenprofil (7) des Heckträgerteils (1) entlang der seitlichen Anlagefläche (5) erstrecken.

5. Höhenstanderfassungssystem gemäß Anspruch 4, **dadurch gekennzeichnet, dass** eine erste Versteifungsrippe (6) von dem Bodenprofil (7) des Heckträgerteils (1) in eine Außenkontur (8) des Befestigungsstegs (4) übergeht.

6. Höhenstanderfassungssystem gemäß einem der Ansprüche 4 und 5, **dadurch gekennzeichnet, dass** jede Versteifungsrippe (6) eine unterschiedlich gewinkelte Ausrichtung gegenüber einer Senkrechten der Vertikalerstreckung des Heckträgerteils (1) aufweist.

7. Höhenstanderfassungssystem gemäß einem der vorherigen Ansprüche, **dadurch gekennzeichnet, dass** an dem Befestigungssteg (4) im Bereich der seitlichen Anlagefläche (5) mindestens eine Stufe (9) ausgebildet ist.

8. Höhenstanderfassungssystem gemäß einem der vorherigen Ansprüche, **dadurch gekennzeichnet, dass** der Befestigungssteg (4) flach und finnenartig von dem Heckträgerteil (1) hervorstehend ausgebildet ist.

9. Höhenstanderfassungssystem gemäß einem der vorherigen Ansprüche, **dadurch gekennzeichnet, dass** die Messvorrichtung (3) eine Stabstange (10), einen Umlenkhebel (11) und ein Potentiometer (12) umfasst, die so angeordnet sind, dass die Stabstange (10) und der Umlenkhebel (11) die Hinterradschwinge (2) mit dem Befestigungssteg (4) verbinden, dabei drehbar gelagert sind und das Potentiometer zur Messung der Auslenkung an dem Befestigungssteg (4) und dem Umlenkhebel (11) angeordnet ist.

10. Höhenstanderfassungssystem gemäß einem der vorherigen Ansprüche, **dadurch gekennzeichnet, dass** die Messvorrichtung (3) ein elektrisches Ausgangssignal ausgibt.

11. Höhenstanderfassungssystem gemäß einem der vorherigen Ansprüche, **dadurch gekennzeichnet, dass** die Messvorrichtung (3) an der Hinterradschwinge (2) in der gleichen Ebene angeordnet ist, in der sich die seitliche Anlagefläche (5) des Befestigungsstegs (4) erstreckt.

## Claims

1. Height detection system of a motorcycle for determining a load-dependent height of a rear carrier part (1) relative to a rear wheel swing arm (2) of the motorcycle, comprising a measuring device (3) connecting the rear carrier part (1) and the rear wheel swing arm (2) for measuring the distance between the rear carrier part (1) and the rear wheel swing arm (2), **characterized in that** a fastening web (4) is formed integrally on the rear carrier part (1) and protrudes from the rear carrier part (1) in the direction of the rear wheel swing arm (2) and forms a lateral bearing face (5) for the measuring device (3).

2. Height detection system according to Claim 1, **characterized in that** the rear carrier part (1) and the fastening web (4) are made integrally from plastic.

3. Height detection system according to Claim 1 and 2, **characterized in that** the lateral bearing face (5) of the fastening web (4) runs parallel to the plane of the longitudinal extent and vertical extent of the rear carrier part (1).

4. Height detection system according to any of the preceding claims, **characterized in that** a plurality of stiffening ribs (6) is formed on the fastening web (4), wherein the ribs extend from a base profile (7) of the rear carrier part (1) along the lateral bearing face (5).

5. Height detection system according to Claim 4, **characterized in that** a first stiffening rib (6) transforms from the base profile (7) of the rear carrier part (1) into an outer contour (8) of the fastening web (4) .

6. Height detection system according to either of Claims 4 and 5, **characterized in that** each stiffening rib (6) has a differently angled orientation relative to a perpendicular of the vertical extent of the rear carrier part (1).

7. Height detection system according to any of the preceding claims, **characterized in that** at least one step (9) is formed on the fastening web (4) in the region of the lateral bearing face (5).

8. Height detection system according to any of the preceding claims, **characterized in that** the fastening web (4) is formed flat and protrudes from the rear carrier part (1) in the manner of a fin.

9. Height detection system according to any of the preceding claims, **characterized in that** the measuring device (3) comprises a pushrod (10), a deflector lever (11) and a potentiometer (12) which are arranged such that the pushrod (10) and the deflector lever (11) connect the rear wheel swing arm (2) to the fastening web (4) and are rotatably mounted, and the potentiometer is arranged for measuring the deflection at the fastening web (4) and the deflector lever (11).

10. Height detection system according to any of the preceding claims, **characterized in that** the measuring device (3) emits an electrical output signal.

11. Height detection system according to any of the preceding claims, **characterized in that** the measuring device (3) on the rear wheel swing arm (2) is arranged in the same plane as that in which the lateral bearing face (5) of the fastening web (4) extends.

## Revendications

1. Système de détection d'assiette d'une moto afin de déterminer l'assiette, dépendant de la charge, d'une partie de support arrière (1) par rapport à un bras oscillant de roue arrière (2) de la moto, ledit système comprenant un dispositif de mesure (3) qui relie la partie de support arrière (1) et le bras oscillant de roue arrière (2) afin de mesurer la distance entre la partie de support arrière (1) et le bras oscillant de roue arrière (2), **caractérisé en ce que**
une nervure de fixation (4) est formée d'une seule pièce sur la partie de support arrière (1), laquelle nervure de fixation s'étend en direction du bras oscillant de roue arrière (2) en faisant saillie de la partie de support arrière (1) et forme une surface d'appui latérale (5) destinée au dispositif de mesure (3) .

2. Système de détection d'assiette selon la revendication 1, **caractérisé en ce que** la partie de support arrière (1) et la nervure de fixation (4) sont formées d'une seule pièce à partir d'une matière synthétique.

3. Système de détection d'assiette selon les revendications 1 et 2, **caractérisé en ce que** la surface d'appui latérale (5) de la nervure de fixation (4) s'étend parallèlement au plan d'extension longitudinale et d'extension verticale de la pièce de support arrière (1) .

4. Système de détection d'assiette selon l'une des revendications précédentes, **caractérisé en ce qu'**un grand nombre de nervures de rigidification (6) sont formées sur la nervure de fixation (4), lesquelles s'étendent depuis un profilé de sol (7) de la partie de support arrière (1) le long de la surface d'appui latérale (5).

5. Système de détection d'assiette selon la revendication 4, **caractérisé en ce qu'**une première nervure de rigidification (6) se transforme du profilé de sol (7) de la partie de support arrière (1) en un contour extérieur (8) de la nervure de fixation (4).

6. Système de détection d'assiette selon l'une des revendications 4 et 5, **caractérisé en ce que** chaque nervure de rigidification (6) présente une orientation angulaire différente par rapport à une perpendiculaire de l'extension verticale de la partie de support arrière (1).

7. Système de détection d'assiette selon l'une des revendications précédentes, **caractérisé en ce qu'**au moins un gradin (9) est formé sur la nervure de fixation (4) dans la zone de la surface d'appui latérale (5).

8. Système de détection d'assiette selon l'une des revendications précédentes, **caractérisé en ce que** la nervure de fixation (4) est conçue pour être plate et faire saillie de la partie de support arrière (1) à la manière d'un aileron.

9. Système de détection d'assiette selon l'une des revendications précédentes, **caractérisé en ce que** le dispositif de mesure (3) comprend une tige (10), un levier de déviation (11) et un potentiomètre (12), qui sont disposés de sorte que la tige (10) et le levier de déviation (11) relient le bras oscillant de roue arrière (2) à la nervure de fixation (4), ce pour quoi ils sont montés de manière rotative et le potentiomètre destiné à mesurer la déviation est disposé sur la nervure de fixation (4) et le levier de déviation (11).

10. Système de détection d'assiette selon l'une des revendications précédentes, **caractérisé en ce que** le dispositif de mesure (3) délivre un signal de sortie électrique.

11. Système de détection d'assiette selon l'une des revendications précédentes, **caractérisé en ce que** le dispositif de mesure (3) est disposé sur le bras oscillant de roue arrière (2) dans le même plan dans lequel la surface d'appui latérale (5) de la nervure de fixation (4) s'étend.
